# EUROPÄISCHE PATENTSCHRIFT

(11) **EP 2 630 858 B1**
(45) Veröffentlichungstag und Bekanntmachung des Hinweises auf die Patenterteilung: **21.10.2015**
(21) Anmeldenummer: 12156883.6
(22) Anmeldetag: 24.02.2012
(51) Int. Cl.: A01F 25/13, B60P 3/035

(54) **Transportvorrichtung zum Ausbringen einer flächigen Abdeckung**
Transport device for dispensing an area covering
Dispositif de transport destiné à l'application d'un revêtement plat

(43) Veröffentlichungstag der Anmeldung: 28.08.2013
(73) Patentinhaber: Endres, Benedikt, 97244 Gützingen (DE)
(72) Erfinder: Endres, Benedikt, 97244 Gützingen (DE)
(74) Vertreter: Spachmann, Holger

(56) Entgegenhaltungen:
- EP-A1- 0 195 760
- WO-A1-2006/051228
- DE-A1- 10 012 185
- DE-U1- 9 408 401
- DE-U1- 29 919 568
- , Retrieved from the Internet: URL:www.youtube.com/watch?v=fMPn8ghS5pl
- , Retrieved from the Internet: URL:www.youtube.com/watch?v=JKZUWcL3SP8
- Datenblatt einer Sattelzugmachine der Fa. Böning, Jaderberg
- , Retrieved from the Internet: URL:www.alle-lkw.de/-TDE_auto_1520546_Aufl ieger_Plattfo

## Beschreibung

### Stand der Technik

Die Erfindung betrifft einen Anhänger mit einem Fahrzeugchassis zum wenigstens Ausbringen einer auf einem Träger angeordneten flexiblen, flächigen Abdeckung aus Vlies, Folie oder ähnliches außerhalb des Anhängers zur Abdeckung von Mieten oder Halden landwirtschaftlichen Stückguts wie Zuckerrüben oder dergleichen.

Es ist bekannt, dass Zuckerrüben nach der Ernte zunächst am Feldrand, aufgeschichtet in sogenannten Mieten, zwischengelagert werden, da die Anlieferung der geernteten Zuckerrüben auf die Annahme- und Verarbeitungsmöglichkeiten der Zuckerfabriken abgestimmt erfolgen muss. Aufgrund der Fabrikschließungen der letzten Jahre wurden die Rübenverarbeitungskampagnen in fast allen Zuckerunternehmen deutlich verlängert. Die Verarbeitung endet je nach Ertragserwartung in der Regel in den letzten Dezembertagen bzw. erst Anfang Januar. Wichtiger denn je ist es daher, die Rübenmieten am Feldrand vor negativen Witterungseinflüssen zu schützen. Grundsätzlich veratmet die Rübe dabei den eingelagerten Zucker auch in der Feldrandmiete. Diese Verluste, wie auch verdunstungsbedingte Masseverluste werden durch Erwärmung noch gefördert. Geeignete Lagerbedingungen und die Einlagerung einwandfreien Rübenmaterials wirken diesen Prozessen entgegen.

Als Mietenschutz hat sich vor allem die Abdeckung mit einem Vlies bewährt. Durch die isolierende Wirkung wird das Eindringen von Frost in die Miete erschwert. Dabei ist ein Luftaustausch über die Atmungsaktivität des Gewebes gewährleistet. Da Niederschlagswasser in der Regel ausreichend abgeleitet wird, ist die Absiebbarkeit der noch anhaftenden Erde, vor allem beim Zudecken der Mieten vor ergiebigen Niederschlägen, verbessert. Eine Abdeckfolie kann auch eingesetzt werden, beispielsweise wenn nach einer längeren Frostperiode eine Wärmeperiode (Temperatur > 0°) folgt, so wird häufig über das Vlies zusätzlich eine Folie ausgelegt, um die Kälte länger in der Miete zu halten. Somit würde der Zeitpunkt des Auftauens hinausgezögert und ein vorzeitiges Verfaulen der Rüben verhindert.

Bei der Aufdeckung des feuchten Vlieses und/oder der Folie wirken enorme Hebelkräfte auf den Aufnehmer. Häufig werden deshalb Stahlrohrkerne benutzt, auf die das Vlies vor dem ersten Einsatz gewickelt wird. Rübenschutzvlies ist bei richtiger Lagerung mehrjährig verwendbar.

Das Zu- und Aufdecken der Rübenmieten wird betriebsindividuell von Hand oder zunehmend auch in Dienstleistung mit sogenannten Wickelgeräten durchgeführt. Zur mechanisierten Abdeckung stehen dem Landwirt aber auch einem Mietenpflegeunternehmen Wickelgeräte mit Dorn- oder Spulentechnik zur Verfügung. Bevorzugt wird die Dorntechnik genutzt. Das Wickelgerät ist in der Regel an einen Auslegearm am Heckkraftheber eines Traktors oder an einen Baumaschinenbagger anschließbar, so dass zum Abdecken bzw. Aufrollen der Traktor eine Vliesrolle von einem Hänger aufnimmt, und diese vom Traktor entlang der Miete abgefahren und dabei abgewickelt oder eingeholt wird. Da der Auslegearm am Heckraftheber, bei zunehmender Auslegeweite, die Standsicherheit des Traktors gefährdet , muss der Traktor möglichst nahe an der Miete entlang fahren. Bei einer Längsabdeckung einer Zuckerrübenmiete kann die komplette Mietenoberfläche mit beispielsweise 12 m breiten Vliesbahnen in einem Arbeitsgang abgedeckt werden. Diese Vliese sind üblicherweise 25 m oder 50 m lang und aufgrund ihrer Größe für die manuelle Abdeckung nicht nutzbar, gängig sind dabei 12 m x 25 m Vliesbahnen. Im Idealfall passen die Mietengrößen zur Länge der Vliesbahnen. Beim Abnehmen des Vlieses wird das Vlies zunächst mit dem Vlieslegegerät von der Miete heruntergezogen. Anschließend wird das Vlies aufgewickelt und am besten in günstig zu fjeschaffenden gebrauchten Wechselbrücken gelagert. Die meisten Rollen können auf diese Art bis zum nächsten Jahr gelagert werden.

Weiterhin sind für eine reibungslose Verladung beim Anlegen der Mieten die Anforderungen der eingesetzten Verladetechnik zu berücksichtigen und die Rüben an einem für die Transportfahrzeuge jederzeit befahrbaren Weg zu lagern.

Aus der EP 0 195 760A geht eine Transportvorrichtung zum Ausbringen einer flächigen Abdeckung im landwirtschaftlichen Bereich hervor, bei der mehrere Bahnen ausbringbaren Rollstoffs auf einer Lagerfläche eines landwirtschaftlichen Anhängers gelagert, und eine einzelne Rolle mittels einer Ausbringungseinrichtung auf den Erdboden abgesenkt und abgerollt werden kann. Mittels der Transportvorrichtung kann ein Rollstoff flächig auf einer ebenen landwirtschaftlichen Fläche ausgebracht werden, wobei die Transportvorrichtung die abzudeckende Fläche abfährt.

In der DE 100 12 185 A1 ist eine Ausbringungsvorrichtung zur Ausbringung von einer auf einer Rolle aufgewickelten Abdeckfolie für die Abdeckung von Rübenmieten offenbart. Die Ausbringungsvorrichtung umfasst einen Auslegereinrichtung mit Auslegerarm, die einen Auslegerdorn umfasst, auf den eine Wickelhülse der Abdeckfolienrolle aufsteckbar ist. Die Ausbringungsvorrichtung ist auf einem landwirtschaftlichen Nutzfahrzeug, beispielsweise einem Traktor oder Unimog montiert. Die Rollen werden von einem externen Lagerwagen aufgenommen.

Aus der DE 299 19 568 U1 ist ein Mietenabdeckgerät bekannt, dass an einen hydraulischen Schwenkarm auf einem Schlepper montiert ist. Das Mietenabdeckgerät kann geschwenkt, abgehoben oder gesenkt werden, um Vliesträgerrollen auf einer Miete abzulegen.

Das Internetvideo "www.youtube.com/ watch?v=JKZUWeL35P8" zeigt einen Anhänger gemäss dem Oberbegriff des Anspruchs 1.

Nachteilig an dem aus dem Stand der Technik bekannten Abwickel- und Einholvorgang ist, dass das Ausbringfahrzeug aufgrund der geringen Auskragweite der Wickelvorrichtung von einem Flurweg versetzt nahe an der Miete entlang fahren muss, so dass zum einen die Gefahr besteht, dass landwirtschaftliches Stückgut zerquetscht wird, zum anderen der Flurweg durch das ständige anfahren der Miete verschmutzt wird. Des Weiteren sind eine Vielzahl von Vliesrollenwechseln mit erheblichem Zeit- und Personalaufwand nötig, um eine langestreckte Miete vollständig abzudecken.

### Offenbarung der Erfindung

Die Aufgabe der Erfindung ist es, eine flexible, mobile und kombinierbare Transportvorrichtung zum Transport sowie zum mechanisierten Ausbringen und Wiedereinholen von flexiblen flächigen Abdeckungen wie Vliese von insbesondere Mieten landwirtschaftlichen Stückguts, wie beispielsweise Zuckerrüben, bereitzustellen.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und den Zeichnungen.

Die Erfindung geht aus von einer als Anhänger ausgebildeten Transportvorrichtung mit einem Fahrzeugchassis zum Ausbringen oder Einholen einer auf einem Träger angeordneten flexiblen, flächigen Abdeckung, insbesondere Vlies, Folie oder ähnliches außerhalb des Anhängers, insbesondere zur Abdeckung von Mieten oder Halden landwirtschaftlichen Stückguts wie Zuckerrüben oder dergleichen.

Es wird vorgeschlagen, dass der Anhänger eine Auslegereinrichtung und eine Lagereinrichtung aufweist, wobei die Lagereinrichtung mindestens eine erste Lagerfläche zum Lagern von ein oder mehreren flexiblen flächigen Abdeckungen umfasst, die von der Auslegereinrichtung ausbringbar sind. Die Lagereinrichtung dient zur Lagerung der flexiblen Abdeckung, im zusammengefalteten oder zusammengerollten Zustand, beispielsweise aufgerollt auf Gewebe- oder Vliestrommeln.

Erfindungsgemäß ist die Auslegereinrichtung in der Lagereinrichtung mit dem Träger der flächigen Abdeckung, auf der ersten Lagerfläche, koppelbar. Weiter kann die angekoppelte flächige Abdeckung zum Ausbringen der Abdeckung von der Lagereinrichtung in eine Ausbringposition, in einer rechtwinklig zur Längsachse der Lagereinrichtung ausgerichteten Ausbringungsrichtung wegbewegbar sein, wobei der Träger der Abdeckung nach vollständiger Abwicklung auf der ersten oder einer zweiten Lagerfläche, welche durch Rungen voneinander getrennt sind, ablegbar und abkoppelbar ist. Weiter kann die Auslegereinrichtung in der Lagereinrichtung von einem Träger der flächigen Abdeckung abkoppelbar und der abgekoppelte Träger auf der zweiten Lagerfläche der Lagereinrichtung ablegbar sein.
Diese Anordnung und Nutzung der Nutz- und Funktionsflächen des Anhängers begünstigt eine möglichst strukturierte und damit zugleich effektive Vorgehensweise beim Ausbringen und Wiederaufnehmen der Abdeckungen, da sich beispielsweise volle Abdeckungen und leere Träger gegenseitig nicht behindern können.

Erfindungsgemäß sind Lagereinrichtung und Auslegereinrichtung auf dem Fahrzeugchassis getrennt abnehmbar montierbar um dadurch eine möglichst flexible Arbeitsweise zu gewährleisten.

In einer bevorzugten Ausgestaltung der Transportvorrichtung kann auf der Lagereinrichtung mindestens eine zweite Lagerfläche zum Lagern wenigstens eines Trägers, insbesondere einer Wickelhülse der flächigen Abdeckung nach dem Ausbringen der flächigen Abdeckung vorgesehen sein. Diese zweite Lagerfläche kann insbesondere durch vertikale Trennelemente, wie beispielsweise Rungen, begrenzt und von der ersten Lagerfläche abgetrennt sein. Auf diese Weise ist eine sehr effektive und schnelle Aufnahme der Abdeckungen von der Lagereinrichtung und eine ebenso schnelle Ablage der leeren Träger möglich, da sich die vollen und leeren Träger so auch nicht gegenseitig behindern können.

Die Basis der Transportvorrichtung kann bevorzugt ein Fahrzeugchassis, insbesondere ein 30-Fuß-Containerfahrzeugchassis bilden, das im Transportgewerbe weit verbreitet ist. Dieses Chassis kann insbesondere als ein mehrachsiger Deichselanhänger, Tandemanhänger oder eine ähnliche Anhängerform ausgeführt sein. Dies gewährleistet eine hohe Verfügbarkeit des Fahrzeugchassis, geringe Kosten, sowie die Möglichkeit zur saisonalen Anmietung des Fahrzeugchassis, das außerhalb der Zuckerrübenerntesaison für andere Aufgaben einsetzbar bleibt.

Am vorderen Ende der Auslegereinrichtung kann ein Antrieb zum Ausbringen und Wiederaufnehmen der Abdeckung angebracht sein, der als ein Kipp- und Schwenksystem ausgeführt sein kann, welches die daran angebrachte Wickeleinheit flexibel kippen und neigen lässt. Dieser Antrieb kann zur Längsachse einer Auszugsrichtung der Auslegereinrichtung schwenkbar oder kippbar montiert, und bevorzugt längenvariabel bis zumindest über die Länge der Lagereinrichtung auskragbar sein. Auf diese Weise können die beispielsweise als Wickelhülsen ausgeführten Träger der Abdeckungen komfortabel aufgenommen und in einem bestimmten Neigungs-/Kippwinkel bei der Arbeit über die Lagermiete geführt werden. Auf diese Weise lassen sich die Abdeckungen möglichst der Form der aufgeschichteten Miete anpassen und die Ausbringung und Wiederaufnahme der Abdeckungen möglichst schnell und einfach durchführen. Der Antrieb kann bevorzugt eine Wickeleinheit umfassen, sodass die flexible, flächige Abdeckung, die bevorzugt als vlies- oder folienartige Abdeckung ausgestaltet sein kann, auf eine Wickelhülse als Träger gewickelt sein kann und diese Abdeckung durch die Wickeleinheit von der Wickelhülse während der Ausbringung abwickelbar ist. Die Verarbeitungsmöglichkeit von rollenartig aufgewickelten vliesartigen Stoffabdeckungen ist zur Verwendung von heute üblichen Abdecktechniken von großem Vorteil und gewährleistet auch, dass ideale Lagerbedingungen bei den in Betracht kommenden Mieten eingehalten werden können.

Zur Erhöhung der Standsicherheit des Anhängers im Betrieb kann ein, bevorzugt gegenüber der Ausbringungsrichtung der Auslegereinrichtung ausfahrbares, Gegengewicht montiert werden oder/und eine seitliche, insbesondere in Ausbringungsrichtung der Auslegereinrichtung ausfahrbare Abstützvorrichtung eingesetzt werden. Das ausfahrbare Gegengewicht kann ganz besonders bevorzugt an der lastabgewandten Seite des Auslegerarms der Auslegereinrichtung angebracht sein, um so direkt das Gewicht der angekoppelten Last auszugleichen. Die Abstützvorrichtung kann beispielsweise aus zwei hintereinander montierten, pendelnd gelagerten und hydraulisch auf das Fahrbahnniveau des Fahrzeugchassis absenkbaren Rädern bestehen. Bevorzugt sind die Räder auf entgegen gesetzten Seiten der Auslegereinrichtung angeordnet. Somit kann im abgesenkten Zustand der Abstützräder auch weitergefahren werden und kann trotzdem ein sehr stabiles Funktionsverhalten im Betrieb des Ausbringens und Wiederaufnehmen der Abdeckungen gewährleistet werden. Die Ausfahrlänge des Gegengewichts bzw. der Abstützvorrichtung kann in Abhängigkeit vom beim Ab- oder Aufwickelvorgang variierenden Gewicht der auskragenden Last variiert werden.

In einer weiteren Ausführung des beschriebenen Anhängers kann eine zweite Auslegereinrichtung bevorzugt am entgegengesetzten Ende der Längsachse der Lagereinrichtung angeordnet sein. Dadurch ist insbesondere eine synchronisierte Ausbringung zweier Abdeckungen in zwei entgegengesetzt ausgerichtete Ausbringungsrichtungen durchführbar, wodurch bei günstiger Anordnung der zu belegenden Mieten die Bearbeitungsgeschwindigkeit sich praktisch verdoppeln lässt. Alternativ ist ein durch die zweite Auslegereinrichtung gebildetes verschwenkbares Gegengewicht bereitstellbar, was wiederum eine noch flexiblere Einsatzmöglichkeit des Anhängers im realen Einsatz auf dem Feld gewährleistet.

Der Aufbau des Anhängers kann vorzugsweise aus zwei Wechselbrückensegmenten bestehen:
Eine erste Wechselbrücke kann als Lagervorrichtung zum Transport der flexiblen flächigen Abdeckungen wie Vliese dienen. Diese kann beispielsweise aus einer Plattform mit seitlichen Rungen bestehen und eine Lagerfläche zum Lagern der Abdeckungen während des Transports aufweisen. Außerdem kann eine zusätzliche Fläche in dieser Lagervorrichtung für die Träger der Abdeckungen vorgesehen sein. Zum Zudecken der Zuckerrübenmiete kann die Lagervorrichtung beispielsweise mit den Vliesen, aufgewickelt auf Stahlkernen, gefüllt sein. Wenn die Vliese verbraucht sind, kann die leere Lagervorrichtung abgesetzt und zur weiteren Arbeit eine gefüllte Lagervorrichtung wieder aufgenommen werden. Beim Wiederaufdecken der Zuckerrübenmiete können dann die leeren Lagervorrichtungen aufgenommen und die vollen zur Lagerung bis zur nächsten Kampagne in einem Lager abgesetzt werden.

Alternativ kann die Lagervorrichtung neu aus einem weiteren Transporthänger mit befüllten Vliesrollen aufgefüllt werden, wobei die Auslegereinrichtung zur Befüllung und dem Ablegen der abgewickelten Stahlkernen eingesetzt werden kann.

Eine zweite Wechselbrücke kann als Auslegereinrichtung zum Ausbringen und Wiederaufnehmen der flexiblen flächigen Abdeckungen dienen. Diese Auslegereinrichtung kann auf dem Anhänger bevorzugt ganz vorne in Fahrtrichtung angebracht sein. Im Gegensatz zur Lagervorrichtung kann diese Auslegereinrichtung aufgebaut bleiben, jedoch zur weiteren Auslastung des Fahrzeugchassis auch abgesetzt werden. Die Auslegereinrichtung kann auf eine Spezialplattform, die ebenfalls das Standardmaß der Absetzbrücken hat, fest aufgebaut und auf dem Fahrzeugchassis verriegelbar ausgeführt sein. Die Verriegelungsfunkton von Lagereinrichtung und Auslegereinrichtung kann bevorzugt durch ein übliches Container-Verriegelungssystem, insbesondere ein Twistlock-System an dem Fahrzeugchassis ausgestaltet sein, sodass beide Einrichtungen getrennt voneinander und bevorzugt miteinander koppelbar sind. Auf diese Weise ist es möglich, Standard-Container-Fahrzeugchassis, die handelsüblich und kosten- und zeitgünstig verfügbar sind, einzusetzen. Wie Standard-Wechselbrücken können sowohl die Auslegereinrichtung als auch die Lagereinrichtung auf Stützbeine abgestellt werden. Dadurch kann ein Containerfahrgestell durch einfaches Absenken der Luftfederung daruntergefahren werden und durch Aufpumpen der Luftfederung die Ausleger- oder Lagereinrichtung aufgenommen werden. Somit können zusätzliche Ladegeräte entfallen.

Vorzugsweise können sämtliche Bedienfunktionen der Auslegereinrichtung über eine Fernbedienung, ganz besonders bevorzugt über eine drahtlose, insbesondere eine Funkfernbedienung gesteuert werden. Dadurch kann die Ausbringung und Wiederaufnahme der flexiblen flächigen Abdeckungen flexibel vom Führerhaus oder auch vom Feld aus gesteuert werden.

Die besonderen Vorteile der oben dargestellten Ausführungsformen einer flexiblen und mobilen Transportvorrichtung zum mechanisierten Ausbringen und Wiedereinholen von flexiblen flächigen Abdeckungen wie Vliese von insbesondere Mieten landwirtschaftlichen Stückguts, wie beispielsweise Zuckerrüben, bestehen darin, dass beispielsweise die Lagereinrichtung künftig nicht mehr von der Auslegereinrichtung getrennt werden muss, sondern in einer Transportvorrichtung kombiniert sein kann. Somit wird Arbeitszeit eingespart und eine Versperrung der Straßen und Wege durch beispielsweise einen geparkten Anhänger, der als Lager der Abdeckungen dient, vermieden. Die Transportvorrichtung kann von dem Weg/Straße aus die Zu- und Aufdeckarbeit verrichten. Dabei wird im Feld kein Schaden durch Befahrung angerichtet und die Straße wird nach Arbeitsende nicht durch an der Bereifung haftende Erde verschmutzt. Das Fahrzeugchassis ist sowohl mit landwirtschaftlichen Zugmaschinen als auch mit Sattelzugmaschinen einsetzbar. Dadurch kann die Arbeit sowohl auf landwirtschaftlicher Ebene als auch durch Speditionsunternehmen verrichtet werden. Durch den integrierten Einsatz von Lager- und Auslegereinrichtung können sehr flexible und effektive Ausbringungs- und Wiederaufnahmeprozesse umgesetzt werden, was sich in einer beträchtlichen Kosten- und Zeitersparnis gegenüber den bisher eingesetzten Werkzeugen und Einrichtungen auswirkt.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1a: eine Seitenansicht einer Auslegereinrichtung und einer Lagereinrichtung nach einem Ausführungsbeispiel der Erfindung;
- Fig. 1b: eine Heckansicht einer Lagereinrichtung nach einem Ausführungsbeispiel der Erfindung;
- Fig. 1c: eine Seitenansicht eines Fahrzeugchassis nach einem Ausführungsbeispiel der Erfindung;
- Fig. 2a: eine Seitenansicht einer Transportvorrichtung mit ausgezogener Auslegereinrichtung nach einem Ausführungsbeispiel der Erfindung;
- Fig. 2b: eine Heckansicht einer Transportvorrichtung nach einem Ausführungsbeispiel der Erfindung;
- Fig. 3a: eine Seitenansicht einer Transportvorrichtung mit einer Auslegereinrichtung bereit zur Aufnahme einer Abdeckung nach einem Ausführungsbeispiel der Erfindung;
- Fig.3b: eine Seitenansicht einer Transportvorrichtung mit einer Auslegereinrichtung am hinteren Ende eines Fahrzeugchassis nach einem weiteren Ausführungsbeispiel der Erfindung;
- Fig. 4: eine Heckansicht einer Transportvorrichtung mit Gegengewicht und seitlichem Abstützelement nach einem anderen Ausführungsbeispiel der Erfindung;
- Fig. 5: eine Heckansicht einer Transportvorrichtung mit Auslegereinrichtung am Heck des Fahrzeugchassis in Arbeitsphase zum Ausbringen einer Abdeckung über einer Zuckerrübenmiete nach einem weiteren Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

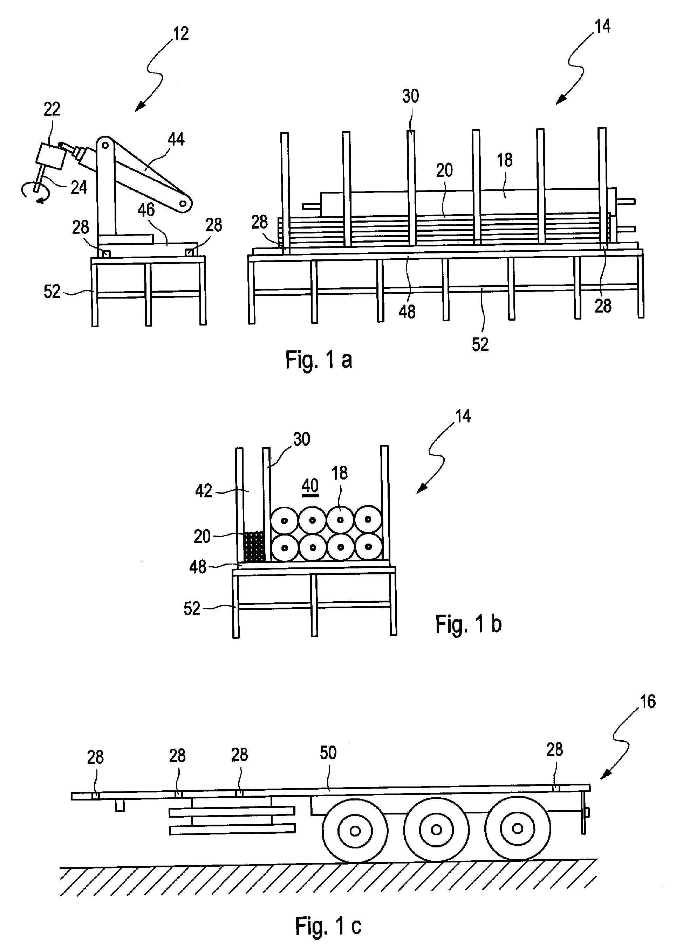

Figur 1 stellt in mehreren Teilfiguren 1a bis 1c die einzelnen Komponenten eines Ausführungsbeispiels der beschriebenen Transportvorrichtung 10 dar. Die linke Seite der Figur 1a zeigt eine Seitenansicht einer Auslegereinrichtung 12 und einer Lagereinrichtung 14 nach einem Ausführungsbeispiel der Erfindung. Die Auslegereinrichtung 12 hat die Form eines um die Hochachse verschwenkbaren und teleskopierbaren Gelenkkrans und ist in einem eingefahrenen Zustand, wie sie beispielsweise bei einer Transportfahrt sich darstellen würde, zu sehen. Die Auslegereinrichtung 12 ist in Figur 1a auf Stützbeinen 52 abgestellt dargestellt. Der Auslegerarm 44 ist auf einer Auslegergrundplatte 46 angebracht, die mit einem Verriegelungssystem 28, das standardmäßig bei Containern verwendet wird, wie beispielsweise ein Twistlock-System, auf einem Fahrzeugchassis 16, bevorzugt ein Standard-Containerchassis, befestigt werden kann. Am freien Ende des Auslegerarms 44 ist ein Wickelantrieb 22 zum Ausbringen der Abdeckung 18 angeordnet, der bei der Verwendung von auf Wickelhülsen als Träger 20 aufgewickelten Abdeckungen 18, die bevorzugt als vlies- oder gazeeartige Stoffabdeckung ausgestaltet sein können, in einer Wickeleinheit 24 endet. Die Wickeleinheit 24 kann eine daran befestigte Abdeckung 18 zum Ausbringen abwickeln und zum Wiederaufnehmen aufwickeln. Der Antrieb 22 ist bevorzugt zur Längsachse einer Auszugsrichtung der Auslegereinrichtung 12 schwenkbar oder kippbar montiert, um die Abdeckungen 18 möglichst universell und in beliebiger Lagerichtung ausbringen zu können. Weiterhin ist die Auslegereinrichtung 12 bevorzugt längenvariabel bis zumindest über die Länge der Lagereinrichtung 14 auskragbar, um den abzudeckenden Flächenbereich möglichst weit ausdehnen zu können.

Weiter ist in Figur 1a rechts ein Ausführungsbeispiel einer Lagereinrichtung 14 dargestellt, die eine Lagereinrichtungsgrundplatte 48 umfasst, auf der vertikale Trennelemente 30, die beispielsweise als Rungen ausgeführt sein können, als Wände eingesetzt sein können. Auch die Lagereinrichtung 14 weist ein Verriegelungssystem 28 auf, das bevorzugt ein Twistlock-System sein kann, mit dem die Lagereinrichtung auf dem Fahrzeugchassis 16 fest montiert werden kann. Die Lagereinrichtung ist in der Figur 1a auf Stützbeinen 52 abgestellt dargestellt.Figur 1b zeigt die in Fig. 1a rechts dargestellte Lagereinrichtung 14 in Heckansicht. Hier ist deutlich zu sehen, wie durch die vertikalen Trennelemente 30, die bevorzugt als Rungen ausgeführt sein können, ein erster Lagerbereich 40 für aufgewickelte Abdeckungen 18 und ein zweiter Lagerbereich 42 für leere Träger voneinander abgetrennt werden können.. Wie oben beschrieben, können als Lagereinrichtungen 14 vorzugsweise handelsübliche Wechselbrücken zum Einsatz kommen, die in der Regel auf Stützbeine 52 abgestellt werden können. Somit kann ein Containerfahrgestell 16 durch einfaches Absenken der Luftfederung daruntergefahren werden und durch Aufpumpen der Luftfederung die Wechselbrücke aufgenommen werden. Somit können zusätzliche Ladegeräte entfallen. Dasselbe Aufnahmeverfahren kann zum Aufnehmen einer Auslegereinrichtung 12 zum Einsatz kommen.

Figur 1c stellt eine Seitenansicht eines Fahrzeugchassis 16 nach einem Ausführungsbeispiel der Erfindung dar. Das Fahrzeugchassis 16 weist einen Rahmen 50 auf, in dem die entsprechenden Gegenstücke des Verriegelungssystems 28 angebracht sind, mit dem die Auslegereinrichtung 12 und die Lagereinrichtung 14 auf dem Fahrzeugchassisrahmen 50 abnehmbar fest montiert werden können. Das Fahrzeugchassis 16 kann insbesondere als mehrachsiger Deichselanhänger, Tandemanhänger oder eine ähnliche Anhängerform ausgebildet sein. Derartige Fahrzeugchassis stehen kommerziell in großem Rahmen günstig zur Verfügung, und können aufgrund der einfachen Befestigung von Ausleger- und Lagereinrichtung 14, 16 saisonal zur Mietenabdeckung genutzt werden, und während der übrigen Zeit für andere Einsatzzwecke verwendet werden..

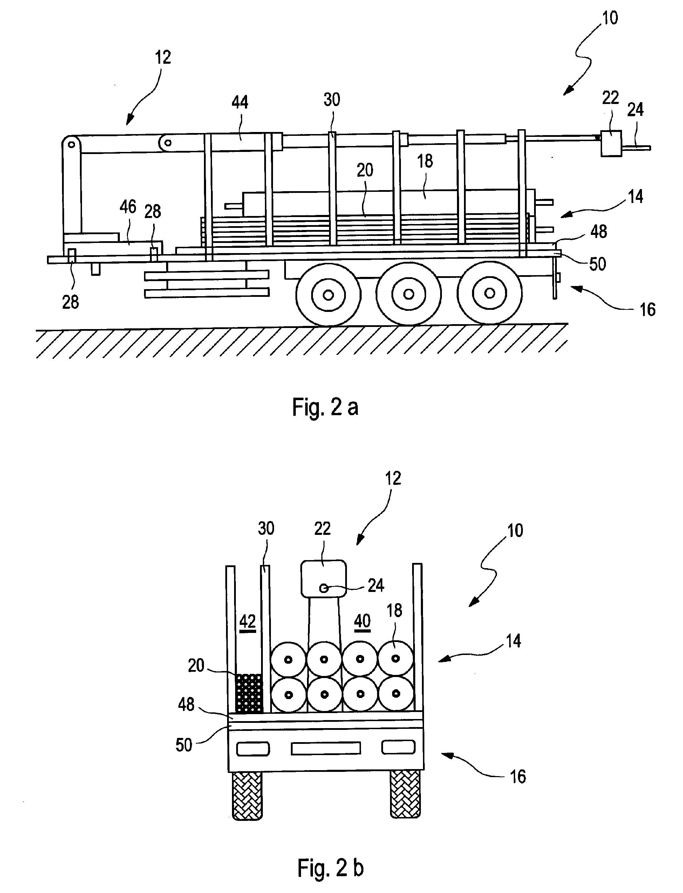

Figur 2 zeigt in den Teilfiguren 2a und 2b in einem Ausführungsbeispiel der Erfindung eine Transportvorrichtung 10, bestehend aus einer Auslegereinrichtung 12 und einer Lagereinrichtung 14, beide montiert auf einem Fahrzeugchassis 16. Figur 2a stellt eine Seitenansicht einer Transportvorrichtung 10 mit ausgezogener Auslegereinrichtung 12 dar. Die Auslegereinrichtung 12 ist in dem gezeigten Beispiel durch Auszug des Auslegerarms 44 in voller Länge mindestens über die gesamte Länge des Fahrzeugchassis 16 auskragbar, um die Abdeckung 18 auch über eine abseits einer Straße oder Weg gelagerte Miete 38 ausbringen zu können. Am vorderen Ende der Auslegereinrichtung 12 ist ein Antrieb 22 zum Ausbringen der Abdeckungen 18, sowie, daran angebracht, eine Wickeleinheit 24 zu sehen. Die Wickeleinheit 24 kann zum Ab-/Aufrollen der auf einer Wickelhülse als Träger 20 aufgerollten Abdeckungen 18 dienen. In der Figur 2a ist auch das Verriegelungssystem 28 zu sehen, bei dem korrespondierende Elemente des Verriegelungssystems 28 von Auslegereinrichtung 12, Lagereinrichtung 14 und Fahrzeugchassis 16 übereinanderliegen und so verriegelbar sind.

Figur 2b zeigt eine Heckansicht einer Transportvorrichtung 10 nach dem Ausführungsbeispiel der Fig. 2a. Es sind die getrennten Lagerbereiche 40 und 42 für volle Abdeckungen 18, bzw. leere Träger 20 zu erkennen. Bevorzugt können die Abdeckungen 18 in dem ersten Lagerbereich 40 mit der Auslegereinrichtung 12 angekoppelt, senkrecht zur Längsrichtung der Transportvorrichtung 10 ausgeschwenkt und auf eine Miete 38, die rechts der Fahrtrichtung liegt, ausgebracht werden. Danach kann die Auslegereinrichtung 12 wieder auf die Transportvorrichtung 10 zurückgeschwenkt werden und der leere Träger 20, beispielsweise eine Wickelhülse, von der Auslegereinrichtung 12 abgekoppelt und im zweiten Lagerbereich 42 abgelegt, sowie dann der Arbeitsgang zur Aufnahme einer neuen Abdeckung 18 gestartet werden. Zur Aufwicklung der Abdeckung 18 kann entsprechend ein umgekehrtes Verfahren verwendet werden.

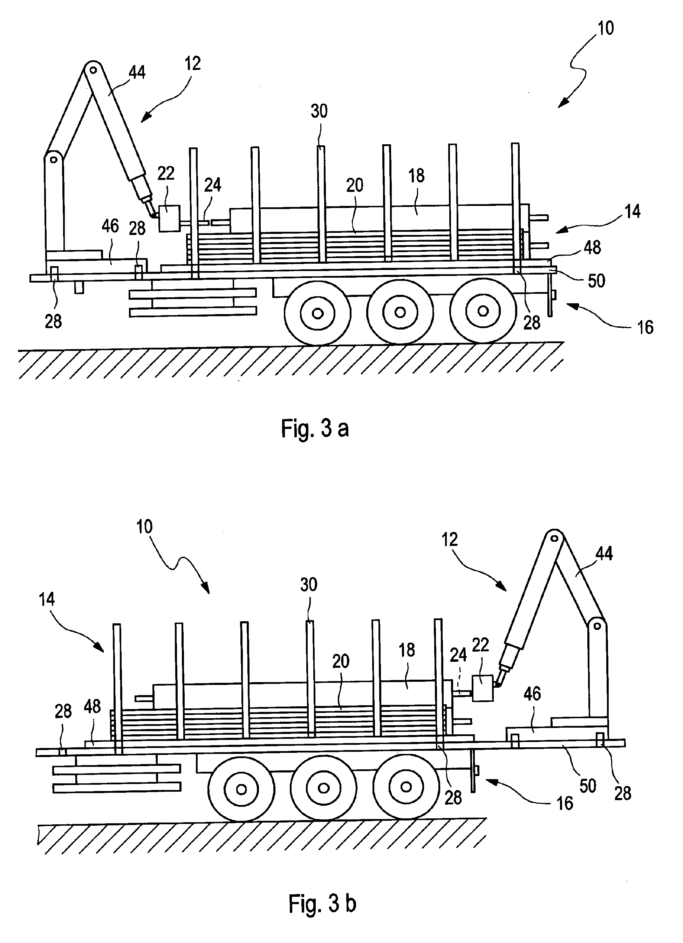

In Figur 3 sind in zwei Teilfiguren 3a und 3b Seitenansichten einer Transportvorrichtung 10 in verschiedenen Ausführungsbeispielen dargestellt. Figur 3a zeigt eine Seitenansicht einer Transportvorrichtung 10 mit einer Auslegereinrichtung 12 am vorderen Ende des Fahrzeugchassis 16 montiert, bereit zur Aufnahme einer Abdeckung 18 nach einem Ausführungsbeispiel der Erfindung. Man erkennt, wie durch den Auslegerarm 44 der Auslegereinrichtung 12 der Antrieb 22 mit Wickeleinheit 24 an eine Abdeckung 18, die im Lagerbereich 40 gelagert ist, angekoppelt wird. Danach würde dann beispielsweise die Abdeckung 18 mit der Auslegereinrichtung 12 angehoben, zur Seite geschwenkt und von dem als Wickelhülse ausgestalteten Träger 20 der Abdeckung 18 während der Fahrt des Fahrzeugchassis 16 abgewickelt und so über die Miete 38 gebreitet werden können.
Figur 3b zeigt eine Seitenansicht einer Transportvorrichtung 10 mit einer Auslegereinrichtung 12, angebracht am hinteren Ende eines Fahrzeugchassis 16 nach einem weiteren Ausführungsbeispiel der Erfindung. Denkbar wäre auch, für besondere Einsatzfälle Auslegereinrichtungen 12 an beiden Enden eines Fahrzeugchassis 16 anzubringen. Auf diese Weise könnten Mieten 38, die zu beiden Seiten einer Straße/Weges aufgeschichtet sind, mit den beiden Auslegereinrichtungen 12 in synchroner Arbeitsweise mit Abdeckungen 18 abgedeckt werden. Dadurch könnte die Ausbringtätigkeit mit bis zu doppelter Geschwindigkeit ablaufen, was die Effektivität bei der Mietenabdeckung stark erhöhen würde. Günstigerweise können beide Auslegereinrichtungen 12 gegenseitig als Gegengewicht während der Ausbringphase dienen, sodass dadurch die Standsicherheit der Transportvorrichtung 10 automatisch erhöht wird und sogar günstiger Weise auf zusätzliche Gegengewichte 32 oder seitliche Abstützelemente 34 verzichtet werden könnte. Voraussetzung könnte sein, dass die Träger 20 von der Wickeleinheit 24 beidseitig aufgenommen werde können, bzw. getrennte Lagerflächen für Träger 20 mit Abdeckungen 18, die von der einen bzw. der anderen Seite aufgenommen werden können, vorgesehen sind

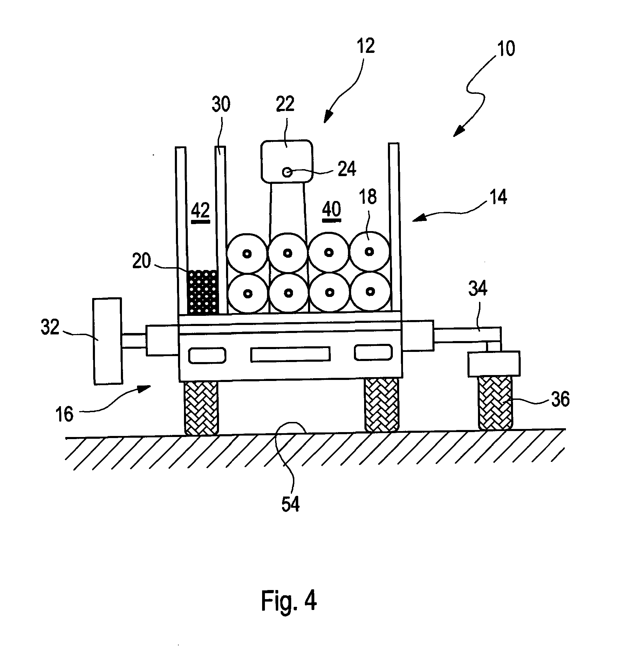

In Figur 4 ist eine Heckansicht einer Transportvorrichtung 10 mit Gegengewicht 32 und seitlichem Abstützelement 34 nach einem anderen Ausführungsbeispiel der Erfindung dargestellt. Auf der linken Seite der Transportvorrichtung 10 ist in dem gezeigten Beispiel ein ausfahrbares Gegengewicht 32 dargestellt, das beispielsweise, wenn die Miete 38 rechts der Transportvorrichtung 10 mit Abdeckungen 18 abgedeckt werden sollte, in Ausbringungsrichtung der Transportvorrichtung 10 ausgefahren werden könnte, um die Standsicherheit der Transportvorrichtung 10 zu erhalten oder zu erhöhen und die gesamte Transportvorrichtung 10 vor einem starken Neigen oder gar Kippen durch das Gewicht der auskragenden Abdeckung 18 auf dem Träger 20 zu bewahren. Alternativ kann das ausfahrbare Gegengewicht 32 auch an der lastabgewandten Seite des Auslegerarms 44 der Auslegereinrichtung 12 angebracht sein, um so bei Ausfahren des Auslegerarms 44 direkt das Gewicht des Arms mit der angekoppelten Last in Form einer Abdeckung 18 auszugleichen. Eine weitere Alternative zu einem Gegengewicht 32 ist auf der rechten Seite der Transportvorrichtung 10 mit einem seitlichen Abstützelement 34 dargestellt, das ein auf Fahrbahnniveau absenkbares Abstützrad 36 umfasst. Auch dadurch kann beispielsweise bei Ausbringen von Abdeckplanen 18 auf Mieten 38 links der Transportvorrichtung 10 entscheidend die Standsicherheit der Transportvorrichtung 10 erhöht werden. Ein Abstützrad 36 weist außerdem gegenüber festen Abstützelementen den Vorteil auf, dass es im Betrieb auf die Fahrbahn abgesenkt bleiben kann, da das Fahrzeugchassis 16 damit auch in einem fahrfähigen Zustand bleibt. Beide Möglichkeiten, die Standsicherheit der Transportvorrichtung 10 im Betrieb zu erhöhen, lassen sich günstiger Weise auf beiden Seiten der Transportvorrichtung 10 anbringen oder sogar in beliebiger Weise miteinander kombinieren. Ganz besonders bevorzugt werden wenigstens zwei Abstützräder auf entgegen gesetzten Seiten der Auslegereinrichtung 12 angeordnet, und/oder zwei Abstützräder hintereinander auf einer Seite der Transportvorrichtung angebracht.

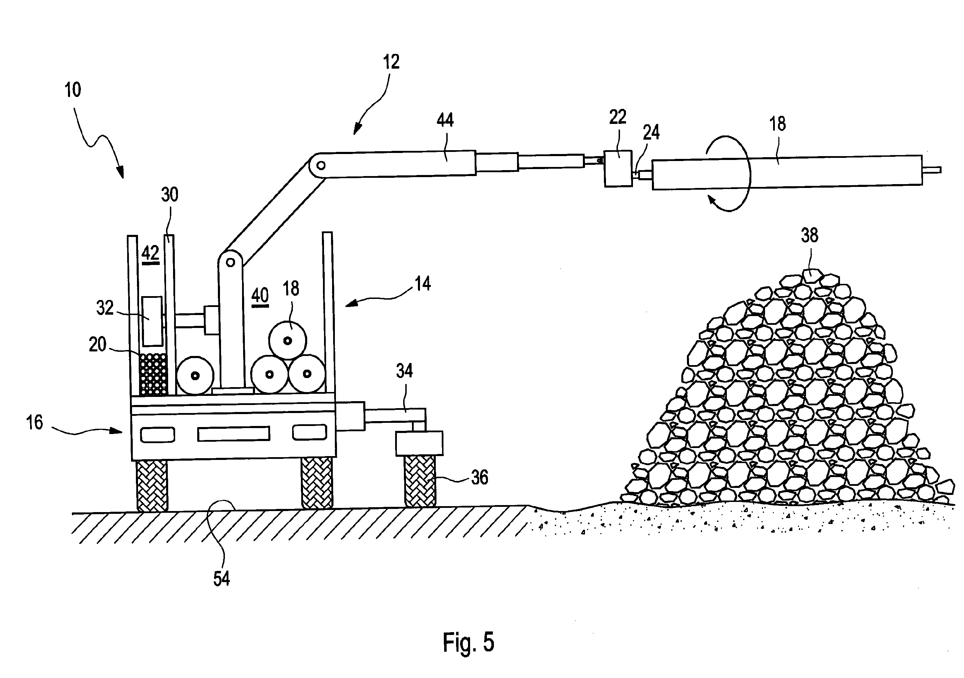

Figur 5 zeigt eine Heckansicht einer Transportvorrichtung 10 mit Auslegereinrichtung 12, angebracht am Heck eines Fahrzeugchassis 16, in Arbeitsphase zum Ausbringen einer Abdeckung 18 über einer Zuckerrübenmiete 38 nach einem weiteren Ausführungsbeispiel der Erfindung. In Figur 5 ist dargestellt, wie eine Auslegereinrichtung 12 mit angekoppelter Abdeckung 18 über eine Zuckerrübenmiete 38, die rechts der Fahrtrichtung der Transportvorrichtung 10 aufgeschichtet ist, geschwenkt wird und die Abdeckung 18 von dem beispielhaft als Wickelhülse ausgestalteten Träger 20 der Abdeckung 18 mit Hilfe der Wickeleinheit 24 abgewickelt wird. Die Transportvorrichtung 10 fährt entlang eines befestigten Flurweges 54, der beispielsweise asphaltiert, betoniert oder geschottert sein kann, wobei die Auslegereinrichtung 12 derart weit auskragen kann, dass vom Flurweg 54 aus die Miete 38, die in der Regel wenige Meter von einem Fahrweg entfernt aufgeschichtet ist, abgedeckt werden kann. Somit wird der Flurweg 54 nicht durch ständiges Hinein- und Herausfahren in die Ackerfläche verunreinigt, und eine aufwändige Nachreinigung des Flurwegs 54 kann unterbleiben. Auf diese Weise kann während der Vorwärtsbewegung der Transportvorrichtung 10 die Abdeckung 18 über die Miete 38 sehr effektiv ausgebracht werden. Auch in dieser Darstellung ist als Beispiel ein ausgefahrenes Gegengewicht 32, das in diesem Fall direkt an der Auslegereinrichtung 12 angebracht dargestellt ist, um das Gewicht des Auslegerarms 44 mit der daran gekoppelten Last in Form einer Abdeckung 18 auszugleichen, sowie ein ausgefahrenes seitliches Abstützelement 34 mit auf Fahrbahnniveau abgesenktem Abstützrad 36 zur Erhöhung der Standsicherheit zu sehen. Der gesamte Ausbringprozess lässt sich günstigerweise über eine Fernbedienung steuern, um möglichst flexibel auf Änderungen der Geometrie der Miete 38 reagieren zu können, oder auch Geschwindigkeit und Höhe des Abrollens einer beispielsweise auf einer Wickelhülse aufgerollten Abdeckung 18 steuern zu können. Ganz besonders bevorzugt ist diese Fernbedienung als drahtlose, beispielsweise als Funkfernbedienung, ausgestaltet, um eine größtmögliche Bewegungsfreiheit während des Ausbringprozesses und damit eine gute Kontroll- und Steuerungsmöglichkeit bei etwaigen unvorhergesehenen Hindernissen bei der Ausbringung und/oder Aufnahme von Abdeckungen 18 zu haben.

Die Erfindung ermöglicht ein effizientes, personalsparendes und kostengünstiges Abdecken von Mieten landwirtschaftlichen Stückgutes, ohne die Fahrbahnen zu verschmutzen. Das Zugfahrzeug und der Ladekran kann von nur einer Person bedient werden, es können beliebig lange Strecken von Fruchtbergen abgedeckt werden, die Landwirtschaftswege werden nicht verschmutzt, da Transportvorrichtung und Zugfahrzeug beim Ausbringen auf dem Weg verbleiben und der Ladekran weit ausgreifen kann. Das Fahrzeugchassis bzw. der Sattelanhänger kann ganzjährig für andere Zwecke genutzt werden und kann bei Bedarf für wenige Tage zur Ausbringung der Abdeckung einfach und schnell umgerüstet werden..

## Patentansprüche

1. Anhänger (10) mit einem Fahrzeugchassis (16) zum Ausbringen oder Einholen einer auf einem Träger (20) angeordneten flexiblen, flächigen Abdeckung (18) aus Vlies, Gaze oder ähnliches außerhalb des Anhängers (10) zur Abdeckung von Mieten (38) oder Halden landwirtschaftlichen Stückguts wie Zuckerrüben oder dergleichen, umfassend eine Lagereinrichtung (14), die mindestens eine erste Lagerfläche (40) zum Lagern von ein oder mehreren flexiblen flächigen Abdeckungen (18) umfasst, **gekennzeichnet durch** eine Auslegereinrichtung (12), umfassend einen Auslegerarm (44), wobei die Lagereinrichtung (14) und die Auslegereinrichtung (12) auf dem Fahrzeugchassis (16) getrennt voneinander abnehmbar montierbar sind, und die Auslegereinrichtung (12) auf der ersten Lagerfläche (40) mit einer Wickelhülse als Träger (20) der flächigen Abdeckung (18) koppelbar ist, und die angekoppelte flächige Abdeckung (18) **durch** den Auslegerarm (44) von der Lagereinrichtung (14) in einer rechtwinklig zur Längsachse der Lagereinrichtung (14) ausgerichteten Ausbringungsrichtung in eine Ausbringposition wegbewegbar ist, wobei der Träger (20) der Abdeckung (18) nach vollständiger Abwicklung auf der ersten (40) oder einer zweiten Lagerfläche (42), welche **durch** Rungen (30) getrennt sind, ablegbar und abkoppelbar ist.

2. Anhänger (10) nach Anspruch 1, **dadurch gekennzeichnet, dass** die zweite Lagerfläche (42) zum Lagern wenigstens eines Trägers (20) nach dem Ausbringen der flächigen Abdeckung (18) durch vertikale Trennelemente (30), ausgeführt als Rungen, begrenzt und von der ersten Lagerfläche (40) abgetrennt ist.

3. Anhänger (10) nach einem der vorhergehenden Ansprüche, **dadurch gekennzeichnet, dass** die Auslegereinrichtung (12) einen Antrieb (22) zum Ausbringen und/oder Aufnehmen der flächigen Abdeckung (18) umfasst.

4. Anhänger (10) nach Anspruch 3, **dadurch gekennzeichnet, dass** der Antrieb (22) eine Wickeleinheit (24) umfasst, und die flexible, flächige Abdeckung (18) auf einer Wickelhülse als Träger (20) gewickelt und bevorzugt als vlies- oder gazeartige Stoffabdeckung ausgestaltet ist, wobei diese durch die Wickeleinheit (24) von der Wickelhülse während der Ausbringung abwickelbar ist.

5. Anhänger (10) nach Anspruch 3 oder 4, **dadurch gekennzeichnet, dass** der Antrieb (22) zur Längsachse einer Auszugsrichtung der Auslegereinrichtung (12) schwenkbar oder kippbar montiert ist, und bevorzugt längenvariabel bis zumindest über die Länge der Lagereinrichtung (14) auskragbar ist.

6. Anhänger (10) nach einem der vorhergehenden Ansprüche, **dadurch gekennzeichnet, dass** zumindest ein Gegengewicht (32), insbesondere ein gegenüber der Ausbringungsrichtung der Auslegereinrichtung (12) ausfahrbares Gegengewicht an der Auslegereinrichtung (12) zur Erhöhung der Standsicherheit montierbar ist.

7. Anhänger (10) nach einem der vorhergehenden Ansprüche, **dadurch gekennzeichnet, dass** zumindest eine seitliche Abstützvorrichtung (34), insbesondere in Ausbringungsrichtung der Auslegereinrichtung (12) ausfahrbare Abstützvorrichtung, bevorzugt ein Abstützpfeiler oder Abstützrad (36) an der Auslegereinrichtung (12) zur Erhöhung der Standsicherheit montierbar ist.

8. Anhänger (10) nach Anspruch 7, **dadurch gekennzeichnet, dass** die seitliche Abstützvorrichtung (34) an der Auslegereinrichtung (12) mindestens zwei auf entgegen gesetzten Seiten der Auslegereinrichtung (12) angeordnete und auf das Fahrbahnniveau des Fahrzeugchassis absenkbare Räder (36) aufweist.

9. Anhänger (10) nach einem der vorhergehenden Ansprüche, **dadurch gekennzeichnet, dass** die Auslegereinrichtung (12) in der Lagereinrichtung (14) von einem Träger (20) der flächigen Abdeckung (18) abkoppelbar ist und der abgekoppelte Träger (20) auf der zweiten Lagerfläche (42) der Lagereinrichtung (14) ablegbar ist.

10. Anhänger (10) nach einem der vorhergehenden Ansprüche, **dadurch gekennzeichnet, dass** eine zweite Auslegereinrichtung (12) bevorzugt am entgegengesetzten Ende der Längsachse der Lagereinrichtung (14) angeordnet ist, wobei insbesondere eine synchronisierte Ausbringung zweier Abdeckungen (18) in zwei entgegengesetzt ausgerichtete Ausbringungsrichtungen durchführbar, oder ein durch die zweite Auslegereinrichtung (12) gebildetes verschwenkbares Gegengewicht (32) bereitstellbar ist.

11. Anhänger (10) nach einem der vorhergehenden Ansprüche, **dadurch gekennzeichnet, dass** das Fahrzeugchassis (16) ein Containerchassis ist, und Auslegereinrichtung (12) und Lagereinrichtung (14) durch ein Container-Verriegelungssystem (28), insbesondere ein Twistlock-System an dem Fahrzeugchassis (16) ankoppelbar und bevorzugt miteinander koppelbar sind.

12. Anhänger (10) nach einem der vorhergehenden Ansprüche, **dadurch gekennzeichnet, dass** eine oder mehrere Funktionen der Auslegereinrichtung (12) über eine Fernbedienung, bevorzugt eine drahtlose Fernbedienung steuerbar sind.

## Claims

1. Trailer (10) having a vehicle chassis (16) for laying out or retracting a flexible flat covering (18) made of non-woven fabric, gauze or similar, arranged on a holder (20) outside the trailer (10), for covering stacks (38) or piles of bulk agricultural produce such as sugar beet or the like, comprising a storage device (14) that comprises at least one first storage area (40) for storing one or more flexible flat coverings (18), **characterized by** a jib device (12) comprising a jib arm (44), where the storage device (14) and the jib device (12) can be mounted on the vehicle chassis (16) separately removable from one another, and the jib device (12) on the first storage area (40) can be coupled to a winding core as the holder (20) of the flat covering (18), and the coupled flat covering (18) can be moved by the jib arm (44) away from the storage device (14) in a laying-out direction aligned at right angles to the longitudinal axis of the storage device (14) into a laying-out position, where the holder (20) of the covering (18) can after complete unwinding be set down and uncoupled on the first (40) or a second storage area (42), said storage areas being separated by stanchions (30).

2. Trailer (10) according to claim 1, **characterized in that** the second storage area (42) for storing at least one holder (20) after laying out of the flat covering (18) is limited by vertical separating elements (30) designed as stanchions and is separated from the first storage area (40).

3. Trailer (10) according to one of the preceding claims, **characterized in that** the jib device (12) comprises a drive (22) for laying out and/or picking up the flat covering (18).

4. Trailer (10) according to claim 3, **characterized in that** the drive (22) comprises a winding unit (24), and the flexible and flat covering (18) is wound on a winding core as the holder (20) and is preferably designed as a non-woven or gauze-like fabric covering, where the latter can be unwound from the winding core by the winding unit (24) during laying out.

5. Trailer (10) according to claim 3 or 4, **characterized in that** the drive (22) is mounted pivotable or tiltable relative to the longitudinal axis of a pull-out direction of the jib device (12) and is preferably extendable in a variable length up to at least the length of the storage device (14).

6. Trailer (10) according to one of the preceding claims, **characterized in that** at least one counterweight (32), in particular a counterweight extendable relative to the laying-out direction of the jib device (12), can be mounted on the jib device (12) to increase stability.

7. Trailer (10) according to one of the preceding claims, **characterized in that** at least one lateral stabilizer device (34), in particular a stabilizer device extendable in the laying-out direction of the jib device (12), preferably a stabilizing support or stabilizing wheel (36), can be mounted on the jib device (12) to increase stability.

8. Trailer (10) according to claim 7, **characterized in that** the lateral stabilizer device (34) on the jib device (12) has at least two wheels (36) arranged on opposite sides of the jib device (12) and lowerable to the roadway level of the vehicle chassis.

9. Trailer (10) according to one of the preceding claims, **characterized in that** the jib device (12) in the storage device (14) can be uncoupled from a holder (20) of the flat covering (18), and the uncoupled holder (20) can be set down on the second storage area (42) of the storage device (14).

10. Trailer (10) according to one of the preceding claims, **characterized in that** a second jib device (12) is arranged preferably at the opposite end of the longitudinal axis of the storage device (14), where in particular a synchronized laying out of two coverings (18) in two oppositely-aligned laying-out directions can be performed, or a pivotable counterweight (32) formed by the second jib device (12) can be provided.

11. Trailer (10) according to one of the preceding claims, **characterized in that** the vehicle chassis (16) is a container chassis, and jib device (12) and storage device (14) can be coupled to the vehicle chassis(16), and preferably coupled to one another, by a container locking system (28), in particular by a twistlock system.

12. Trailer (10) according to one of the preceding claims, **characterized in that** one or more functions of the jib device (12) can be controlled by a remote control, preferably a wireless remote control.

## Revendications

1. Remorque (10) pourvue d'un châssis de véhicule (16), destinée à étaler ou reprendre une couverture (18) souple, plane, disposée hors de la remorque (10) sur un support (20), constituée de non-tissé, de gaze ou d'un matériau semblable, servant à recouvrir des tas (38) ou des dépôts de produits agricoles isolés tels que des betteraves sucrières ou produits similaires, ladite remorque comportant un dispositif de stockage (14) comprenant au moins une première surface de stockage (40) destinée à stocker une ou plusieurs couverture(s) (18) souple(s), plane(s), **caractérisée par** un dispositif à flèche (12) comprenant un bras (44), sachant que le dispositif de stockage (14) et le dispositif à flèche (12) peuvent être montés sur le châssis de véhicule (16) de manière amovible séparément l'un de l'autre, que le dispositif à flèche (12) sur la première surface de stockage (40) peut être couplé à un mandrin en tant que support (20) de la couverture plane (18), et que la couverture plane (18) couplée peut être sortie du dispositif de stockage (14) par le bras (44) et placée dans une position d'étalement selon une direction d'étalement perpendiculaire à l'axe longitudinal du dispositif de stockage (14), sachant qu'après le déroulement intégral, le support (20) de la couverture (18) peut être stocké et découplé sur la première surface de stockage (40) ou sur une deuxième surface de stockage (42), lesdites surfaces de stockage étant séparées par des ridelles (30).

2. Remorque (10) selon la revendication 1, **caractérisée en ce que** la deuxième surface de stockage (42) destinée à stocker au moins un support (20) après l'étalement de la couverture plane (18) est délimitée et séparée de la première surface de stockage (40) par des éléments de séparation (30) conçus sous forme de ridelles.

3. Remorque (10) selon l'une des revendications précédentes, **caractérisée en ce que** le dispositif à flèche (12) comprend un mécanisme d'entraînement (22) permettant d'étaler et/ou de reprendre la couverture plane (18).

4. Remorque (10) selon la revendication 3, **caractérisée en ce que** le mécanisme d'entraînement (22) comprend une unité de bobinage (24), et que la couverture souple, plane (18) est enroulée sur un mandrin en tant que support (20) et de préférence conçue en tant que couverture en étoffe de type non-tissé ou gaze, sachant que ladite couverture peut être déroulée du mandrin par l'unité de bobinage (24) pendant l'étalement.

5. Remorque (10) selon la revendication 3 ou 4, **caractérisée en ce que** le mécanisme d'entraînement (22) est monté de manière pivotante ou basculante par rapport à l'axe longitudinal d'un sens de déploiement du dispositif à flèche (12), et peut de préférence être placé en porte-à-faux sur une longueur variable jusqu'à au moins la longueur du dispositif de stockage (14).

6. Remorque (10) selon l'une des revendications précédentes, **caractérisée en ce que** peut être monté sur le dispositif à flèche (12) au moins un contrepoids (32), en particulier un contrepoids déployable à l'opposé de la direction d'étalement du dispositif à flèche (12), afin d'augmenter la stabilité au renversement.

7. Remorque (10) selon l'une des revendications précédentes, **caractérisée en ce que** peut être monté sur le dispositif à flèche (12) au moins un support (34) latéral, en particulier un support déployable vers la direction d'étalement du dispositif à flèche (12), de préférence une béquille ou une roue d'appui (36), afin d'augmenter la stabilité au renversement.

8. Remorque (10) selon la revendication 7, **caractérisée en ce que** le support (34) latéral sur le dispositif à flèche (12) présente au moins deux roues (36) disposées des deux côtés opposés du dispositif à flèche (12) et abaissables au niveau de la chaussée du châssis de véhicule.

9. Remorque (10) selon l'une des revendications précédentes, **caractérisée en ce que** le dispositif à flèche (12) dans le dispositif de stockage (14) peut être découplé d'un support (20) de la couverture plane (18) et que le support (20) découplé peut être stocké sur la deuxième surface de stockage (42) du dispositif de stockage (14).

10. Remorque (10) selon l'une des revendications précédentes, **caractérisée en ce qu'**est disposé un deuxième dispositif à flèche (12) de préférence à l'extrémité opposée de l'axe longitudinal du dispositif de stockage (14), sachant qu'en particulier un étalement synchronisé de deux couvertures (18) dans deux directions d'étalement opposées peut être réalisé, ou qu'un contrepoids (32) pivotant formé par le deuxième dispositif à flèche (12) peut être mis à disposition.

11. Remorque (10) selon l'une des revendications précédentes, **caractérisée en ce que** le châssis de véhicule (16) est un châssis de conteneur, et que le dispositif à flèche (12) et le dispositif de stockage (14) peuvent être couplés au châssis de véhicule (16) au moyen d'un système de verrouillage de conteneur (28), en particulier un système à verrou tournant, et peuvent être de préférence couplés entre eux.

12. Remorque (10) selon l'une des revendications précédentes, **caractérisée en ce qu'**une ou plusieurs fonction(s) du dispositif à flèche (12) peut/peuvent être commandée(s) par une télécommande, de préférence une télécommande sans fil.
